# EUROPÄISCHE PATENTSCHRIFT

(11) **EP 0 760 277 B1**
(45) Veröffentlichungstag und Bekanntmachung des Hinweises auf die Patenterteilung: **18.10.2000**
(21) Anmeldenummer: 96111985.6
(22) Anmeldetag: 25.07.1996
(51) Int. Cl.: B29C 45/50, B29C 45/76

(54) **Regelungsverfahren für die hydraulische Unterstützung eines elektrischen Antriebs in einer Spritzgiessmaschine und elektrischer Antrieb zur Durchführung des Verfahrens**
Control method for the hydraulic assistance of an electric drive in an injection moulding machine and electric drive for carrying out the control method
Procédé de contrôle pour l'assistance d'un entraînement électrique dans une machine à mouler par injection et entraînement pour mise en oeuvre du procédé de contrôle

(30) Priorität: 01.09.1995 DE 19532267
(43) Veröffentlichungstag der Anmeldung: 05.03.1997
(73) Patentinhaber: Ferromatik Milacron Maschinenbau GmbH, D-79364 Malterdingen (DE)
(72) Erfinder: Jaroschek, Christoph, Dr.-Ing., 79346 Endingen (DE); Bourdon, Karl-Heinz, Dr.-Ing., 79276 Reute (DE)
(74) Vertreter: Röther, Peter, Dipl.-Phys.

(56) Entgegenhaltungen:
- EP-A- 0 166 788
- EP-A- 0 508 277
- DE-A- 4 344 335
- US-A- 5 381 702
- PATENT ABSTRACTS OF JAPAN vol. 16, no. 510 (M-1328), 21.Oktober 1992 & JP-A-04 189525 (HITACHI LTD), 8.Juli 1992,

## Beschreibung

Die Erfindung betrifft ein Regelungsverfahren für die hydraulische Unterstützung eines elektrischen Antriebs in einer Spritzgießmaschine, insbesondere für den Schneckenvortrieb beim Einspritzvorgang und/oder in der Nachdruckphase mit einem Elektromotor, der über ein geeignetes Getriebe die axiale Vortriebsbewegung bewirkt, und einem aus einem Druckmittelspeicher mit Druck beaufschlagbaren, in einem Zylinder verschiebbaren Kolben, dessen Bewegung der durch den Elektromotor erzeugten axialen Bewegung überlagerbar ist.

Die Erfindung betrifft ferner einen elektrischen Antrieb zur Durchführung des Regelungsverfahrens.

Die Erfindung wird im folgenden am Beispiel des Einspritzvorgangs von plastifiziertem Kunststoffmaterial in die Kavität eines Formwerkzeugs erläutert, obwohl die Erfindung auf diesen Anwendungsfall selbstverständlich nicht beschränkt ist. So ist denkbar, daß ein derartiger hydraulisch unterstützter elektrischer Antrieb auch auf der Schließseite der Spritzgießmaschine zum Einsatz kommt oder aber bei der Aufrechterhaltung der Düsenanlagekraft während des Einspritzvorganges.

Bei diesem Einspritzvorgang arbeitet ein Einspritzaggregat in der Regel nach folgendem Schema:

Die im Plastifizierzylinder rotierbar und axial verschiebbar gelagerte Einspritzschnecke verfügt über zwei elektrische Antriebe. Der eine bewirkt die Rotationsbewegung der Schnecke und der andere die translatorische Bewegung der Schnecke im Plastifizierzylinder. Am Anfang des Zyklus befindet sich die Spitze der Plastifizier- und Einspritzschnecke im Bereich des Düsenmundstücks des Plastifizierzylinders. Während der Zuführung und der Plastifizierung des Kunststoffmaterials fördert die Schnecke durch ihre Rotationsbewegung plastifiziertes Kunststoffmaterial vor die Schneckenspitze, wobei sich die Schnecke von der Düsenöffnung so lange wegbewegt, bis genügend plastifiziertes Material vor die Schneckenspitze transportiert ist. Dann wird der Antrieb zur translatorischen Bewegung der Schnecke zugeschaltet, wobei jetzt die Schnecke als Einspritzkolben dient, der die plastifizierte Masse durch das Düsenmundstück in die Kavität des Formwerkzeugs einspritzt.

Ein derartiges Einspritzaggregat ist beispielsweise aus der DE-OS 43 44 335 bekannt. Dort erfolgt die Umsetzung der Rotationsbewegung des Elektromotors in eine translatorische Bewegung der Schnecke über eine Spindel, in deren Innerem ein Innenzylinder vorgesehen ist, in dem ein mit dem Antriebszapfen verbundender Kolben geführt ist. Über eine durch den Kolben und den Antriebszapfen über ein Druckproportionalventil zu einem Hydrauliktank geführte Leitung kann aus dem Innenzylinder bei Staubelastung der Schnecke Hydrauliköl zum Tank abströmen, wodurch sich mit Hilfe des Druckproportionalventils der gewünschte Staudruck sicherstellen läßt.

Das Druckmittel in diesem Innenzylinder dient somit lediglich als Pufferelement, welches gewährleisten soll, daß der Staudruck annähernd konstant bleibt.

Eine ähnliche Lösung ist in der US-A-5 381 702 offenbart sowie in der JP-04-189525 und der EP-A-0 508 277.

Darüber hinaus wird noch auf die EP-A-0 166 788 verwiesen, in der eine Vorrichtung dargestellt ist, die ebenfalls über einen elektrischen Antrieb und eine hydraulisch arbeitende Vorrichtung verfügt, die derart miteinander zusammenwirken, daß der Elektromotor während des Nichteinspritzens den Druckmittelzylinder als Energieakkumulator auflädt.

Nachteilig bei diesen Ausführungsformen ist allerdings, daß bei erhöhter Belastung, beispielsweise in der Nachdruckphase oder auch beim Einspritzvorgang selbst, der die translatorische Bewegung der Schnecke bewirkende Elektromotor zu starken Belastungen ausgesetzt wird. So lange die Leistung des Elektromotors, beispielsweise ein Servomotor, für die translatorische Bewegung bzw. für die Nachdruckphase ausreicht, treibt die Maschine die hydraulisch zu unterstützende Achse, im vorliegenden Beispiel die Einspritzschnecke, mit einem hohen Wirkungsgrad an. Erst bei höheren geforderten Lasten sinkt der gesamte Wirkunsgrad der Maschine.

Der Erfindung liegt daher die Aufgabe zugrunde, ein Regelungsverfahren der eingangs genannten Art so zu führen, daß Überlastungen des Antriebsmotors vermieden werden und der Wirkungsgrad der Maschine in etwa konstant bleibt.

Die Erfindung löst diese Aufgabe mit Hilfe des Regelungsverfahrens gemäß Patentanspruch 1.

Ferner wird diese Aufgabe durch den elektrischen Antrieb gemäß Anspruch 9 gelöst.

Vorteilhafte Ausführungsformen der Erfindung sind Gegenstand der Unteransprüche.

Im Gegensatz zu den aus den obengenannten Druckschriften bekannten Antrieben ist die hydraulische Unterstützung im erfindungsgemäßen Fall keine passive, lediglich reagierende Einrichtung, sondern unterstützt den Elektromotor für die translatorische Bewegung abhängig von bestimmten Belastungszuständen aktiv.

Es handelt sich somit um eine hydraulische Kraftverstärkung eines elektrischen Antriebs. Hierzu wird die Spindel bzw. die Zahnstange, die als Übertragungselement der Rotationsbewegung des Elektromotors in eine translatorische Bewegung der Schnecke dienen, in ihrem rückwärtigen Ende mit einem Hydraulikzylinder versehen bzw. gekoppelt, wie es an sich aus der DE-OS 43 44 335 bekannt ist. Dieser Hydraulikzylinder ist über regel- bzw. steuerbare Hydraulikventile mit einem hydraulischen Druckmittelspeicher, auch Blasenspeicher genannt, gekoppelt.

Die Zuschaltung der hydraulischen Energie erfolgt in Abhängigkeit von der Last des Elektromotors. So sind für höhere Geschwindigkeiten zum Beispiel an der Spritzachse einer Spritzgießmaschine zum Einspritzen einer Menge Kunststoffschmelze entsprechend den rheologischen Eigenschaften der Schmelze höhere Kräfte erforderlich. Damit steigt zwangsläufig die Lastaufnahme des treibenden Elektromotors. Bei Erreichen einer definierten Last, die entweder über eine Drehmomentmessung oder eine Messung der Stromaufnahme bestimmt wird, wird hydraulische Energie zugeschaltet, d.h. Druck in den Zylinderraum vor dem Arbeitskolben gefördert. Der Druckanstieg im Zylinderraum ist proportional zur Lastaufnahme des Antriebsmotors.

Die Zuschaltung der hydraulischen Kraftverstärkung kann einmal beim Einspritzvorgang erforderlich sein, wobei zur Einhaltung einer entsprechenden Einspritzgeschwindigkeit der Elektromotor ohne Unterstützung eventuell überlastet werden könnte. In diesem Fall kann das Rückführsignal für die Regelung des Hydraulikkreislaufes die Ist-Geschwindigkeit sein, die mit der Soll-Geschwindigkeit verglichen wird. Bei einer Unterschreitung der Sollgeschwindigkeit, d.h. wenn der Motor in seiner Leistung nicht mehr ausreicht, die Soll-Geschwindigkeit zu erreichen, wird der Einspritzvorgang hydraulisch unterstützt, wie oben ausgeführt.

Zum anderen kann die Zuschaltung der hydraulischen Energie in der Nachdruckphase erfolgen. Dadurch, daß während des Einspritzvorganges die Kavität des Formwerkzeuges bereits gefüllt ist und durch den Nachdruck Schrumpfungseffekte des Formlings in der Kavität ausgeglichen werden sollen, wirken gerade in dieser Phase hohe Druckkräfte, die versuchen, die Schnecke nach hinten zurückzutreiben. Auch in diesem Fall kann der Elektromotor seine obere Leistungsgrenze erreichen. Neben der Möglichkeit der direkten Messung der Leistungsaufnahme des Elektromotors wird gemäß einer vorteilhaften Ausführungsform der Erfindung der Ist-Druck in der Schmelze gemessen und mit einem Soll-Nachdruck verglichen. Fällt der Ist-Druck unter den Soll-Druck, ist das ein Zeichen, daß der Elektromotor eine Leistungsgrenze erreicht bzw. überschritten hat. Auch in diesem Fall wird dann die hydraulische Kraftverstärkung zugeschaltet.

Neben der direkten Schmelzedruckmessung kann auch zur Erzeugung des Rückführsignals eine Kraftmessung am Ende des Schneckenschaftes durchgeführt werden, wobei einem bestimmten (schädlichen) Belastungszustand des Motors eine entsprechende Kraftspitze zugeordnet ist.

Somit wird bei Schonung des Elektromotors der Wirkungsgrad der Maschine auf einem kontant hohen Niveau gehalten, was zum einen der Qualitätssicherung dient zum anderen aber auch gewährleistet, daß die Maschine, insbesondere der Antrieb, störungsunanfälliger ist.

Gemäß einem weiteren vorteilhaften Merkmal der Erfindung ist der Druckmittelspeicher von einer vom Elektromotor antreibbaren Pumpe aufladbar, wobei ein Kupplungssystem vorgesehen ist, über das der Elektromotor alternativ mit der Pumpe oder dem Getriebe für die translatorische Bewegung der Schnecke verbindbar ist.

Das heißt, daß während der Plastifizierphase, wenn die Schnecke lediglich eine Rotationsbewegung ausführt, und dabei (durch das sich aufbauende Kunststoffpolster vor der Schneckenspitze) nach hinten verschoben wird, wobei der Druckraum im Druckmittelzylinder selbstverständlich drucklos ist, der Elektromotor vom Translationsgetriebe entkoppelt und mit der Pumpe gekoppelt ist. Die Pumpe pumpt das im Kreislauf befindliche Hydrauliköl in den Speicher, wo ein Druck von etwa 160 bar erreicht wird.

Die Ölmenge ist dabei verglichen mit den bei früher üblichen, rein hydraulisch angetriebenen Maschinen so klein, daß Umweltprobleme vernachlässigbar sind.

Die Erfindung wird im folgenden anhand einer Zeichnung dargestellt und näher erläutert.

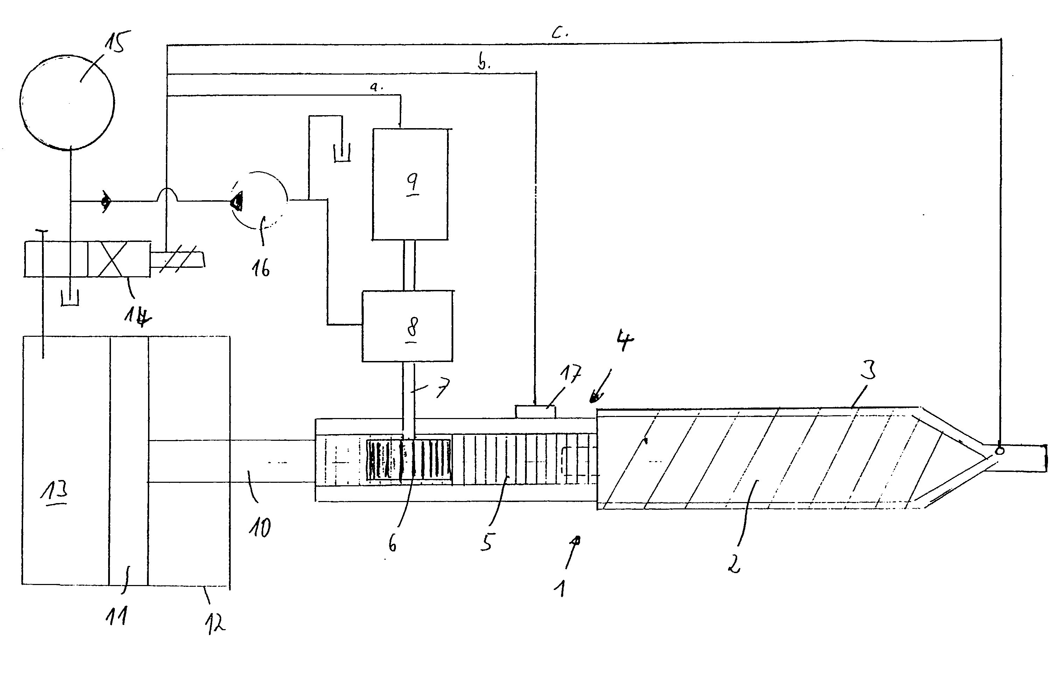

Die einzige Figur zeigt in sehr schematisierter Darstellung das Einspritzaggregat einer Spritzgießmaschine, welches allgemein mit dem Bezugszeichen 1 versehen ist. Es besteht hauptsächlich aus einer Plastifizier- und Einspritzschnecke 2, welche in einem Plastifizierzylinder 3 rotierbar und axial verschiebbar gelagert ist. Der Rotationsantrieb für die Schnecke 2 ist nicht dargestellt.

Die Schnecke 2 ist relativ zu einem translatorisch wirkenden Antriebsglied bei 4 drehbar gelagert. Dieses translatorische Antriebsglied ist im vorliegenden Fall eine Zahnstange 5. Mit den Zähnen der Zahnstange 5 kämmen die Zähne eines Ritzels 6, welches auf einer Welle 7 sitzt, die über ein Kupplungselement 8 von einem Elektromotor 9 angetrieben wird. Mit der Zahnstange 5 fluchtend und an ihrer freien Stirnseite befestigt ist die Kolbenstange 10 eines Kolbens 11, der in einem Hydraulikzylinder 12 verschiebbar ist. Der Zylinderraum 13, der der Kolbenstange abgewandt ist, ist über ein Wegeventil 14 mit einem Druckmittelspeicher 15 verbindbar.

Zusätzlich kann der Elektromotor 9 über die Kupplung 8 bei Entkopplung des Ritzels 6 eine Hydraulikpumpe 16 antreiben, die den Druckmittelspeicher 15 auflädt.

Mit den Buchstaben a, b und c sind alternative Regelungsmöglichkeiten dargestellt, die auf das Wegeventil 14 einwirken und es bei Bedarf in eine Stellung bringen, bei der der Zylinderraum 13 mit dem Speicher 15 verbunden oder von diesem getrennt ist.

Mit a ist die Möglichkeit angesprochen, daß durch Messung des Drehmoments oder der Leistungsaufnahme des Elektromotors 9 selbst ein Signal erzeugt wird, welches auf eine Überlastung des Elektromotors 9 hindeutet und somit das Wegeventil anweist, in die Schaltstellung zu gelangen, in der der Speicher 15 mit dem Zylinderraum 13 verbunden ist. Dann unterstützt der hydraulische Antrieb den elektrischen Antrieb, z.B. bei der Vorwärtsbewegung (Einspritzbewegung) der Schnecke. Genauso kann diese Unterstützung erfolgen, wenn die Schnecke bereits die erforderliche Menge an Kunststoffmaterial eingespritzt hat und nun in der Nachdruckphase eine geringe Menge weiteren Materials nachdrücken muß.

Im Falle der Alternative b wird mit Hilfe einer Weg-Zeitmessung die Ist-Geschwindigkeit beim Schneckenvortrieb gemessen und in einer nicht dargestellten Elektronik mit der gewünschten Sollgeschwindigkeit verglichen. Unterschreitet die Ist-Geschwindigkeit die Soll-Geschwindigkeit, ist das ein Zeichen für die Überlastung des Elektromotors 9, so daß ein Signal erzeugt wird, das ebenfalls auf das Wegeventil 14 in der Weise wirkt, daß es den Speicher 15 mit dem Zylinderraum 13 verbindet, wodurch die hydraulische Kraftverstärkung zugeschaltet wird.

Eine dritte Alternative ist mit dem Buchstaben c bezeichnet. Hier wird im Bereich des Düsenmundstücks vor der Schnecke 3 der Schmelzedruck gemessen. Dieser Ist-Wert wird mit einem Soll-Wert verglichen und bei Unterschreitung des Sollwertes wird ebenfalls das Wegeventil 14 veranlaßt, den Zylinderraum 13 mit dem Speicher 15 zu verbinden.

Statt des Schmelzedrucks kann auch bei 4 die dort wirkende Kraft beim Nachdrücken gemessen werden, wodurch ebenfalls ein Signal für die Zuschaltung des hydraulischen Antriebs erzeugt wird.

Über die Kupplung 8 wird der Elektromotor 9 mit der Pumpe 16 gekoppelt, dann nämlich, wenn der Plastifiziervorgang durchgeführt wird. In dieser Phase führt die Schnecke lediglich eine aktive Rotationsbewegung aus, wodurch sie plastifiziertes Material vor die Schneckenspitze transportiert, wodurch sich wiederum die Schnecke durch das sich aufbauende Kunststoffpolster nach hinten bewegt.

## Patentansprüche

1. Regelungsverfahren für die hydraulische Unterstützung eines elektrischen Antriebs in einer Spritzgießmaschine, insbesondere für den Schneckenvortrieb beim Einspritzvorgang und/oder in der Nachdruckphase mit einem Elektromotor (9), der über ein geeignetes Getriebe (6,7) die axiale Vortriebsbewegung bewirkt, und einem aus einem Druckmittelspeicher (15) mit Druck beaufschlagbaren, in einem Zylinder (12) verschiebbaren Kolben (11), dessen Bewegung der durch den Elektromotor (9) erzeugten axialen Bewegung überlagerbar ist,
dadurch gekennzeichnet,
daß die Druckbeaufschlagung über den Druckmittelspeicher (15) bei Erreichen einer definierten Regelgröße erfolgt, die einem festgelegten Belastungszustand des Elektromotors (9) entspricht, wobei der Druckanstieg im Zylinder (13) proportional zur Lastaufnahme des Elektromotors (9) ist.

2. Regelungsverfahren nach Anspruch 1,
dadurch gekennzeichnet,
daß die Regelgröße direkt am Elektromotor (9) gemessen wird.

3. Regelungsverfahren nach Anspruch 2,
dadurch gekennzeichnet,
daß zur Erzeugung des Regelsignals das Drehmoment des Elektromotors (9) gemessen wird.

4. Regelungsverfahren nach Anspruch 2,
dadurch gekennzeichnet,
daß zur Erzeugung des Regelsignals die Stromaufnahme des Elektromotors (9) gemessen wird.

5. Regelungsverfahren nach einem der Ansprüche 1 bis 4,
dadurch gekennzeichnet,
daß das Rückführsignal für die Regelung des Druckmittelkreislaufs die Vortriebs-Ist-Geschwindigkeit und damit die tatsächliche Einspritzgeschwindigkeit ist, die mit der Sollgeschwindigkeit verglichen wird.

6. Regelungsverfahren nach einem der Ansprüche 1 bis 4,
dadurch gekennzeichnet,
daß das Rückführsignal für die Regelung des Drucksmittelkreislaufs der Ist-Druck in der Einspritzdüse in der Nachdruckphase ist, der mit dem Soll-Nachdruck verglichen wird.

7. Regelungsverfahren nach Anspruch 6,
dadurch gekennzeichnet,
daß die Drucksignale durch Einsatz eines Schmelzedruckmeßgerätes erzeugt werden.

8. Regelungsverfahren nach Anspruch 6,
dadurch gekennzeichnet,
daß die Drucksignale durch eine Kraftmessung im Verbindungsbereich (4) von Einspritzschnecke (2) und translatorischem Antriebsglied (5) erzeugt werden.

9. Elektrischen Antrieb zur Durchführung des Regelungsverfahrens nach einem oder
mehreren der Ansprüche 1 bis 8, mit
einem Elektromotor (9), der über ein geeignetes Getriebe (6,7) mit der Schnecke (2) zur axialen Vortriebsbewegung desselben verbunden ist, gekennzeichnet durch einen aus einem Druckmittelspeicher (15) mit Druck beaufschlagbarem, in einem Zylinder (13) verschiebbaren Kolben (11), dessen Bewegung der durch den Elektromotor (9) erzeugten axialen Bewegung überlagerbar ist, wobei der den Kolben (11) aufweisende Zylinder (13) über mindestens ein steuer- und regelbares Hydraulikventil (14) mit dem Druckmittelspeicher (15) verbindbar ist und wobei mittels Messung des Belastungszustandes des Elektromotors (9) und zur Erzeugung eines Regelungssignals für den Zylinder (13) vorgesehen sind.

10. Elektrischen Antrieb nach Anspruch 9,
dadurch gekennzeichnet,
daß der Druckmittelspeicher (15) von einer von dem Elektromotor (9) antreibbaren Pumpe (16) aufladbar ist, wobei ein Kupplungssystem (8) vorgesehen ist, über das der Elektromotor (9) alternativ mit der Pumpe (16) oder mit dem Getriebe (5,6,7) verbindbar ist.

## Claims

1. A control method for the hydraulic support of an electric drive in an injection moulding machine, in particular for the forward drive of the screw during the injection process and/or in the after-pressure phase with an electric motor (9) which, via a suitable gear unit (6, 7), causes the axial forward drive, and with a piston (11) which from a pressure-medium reservoir (15) is susceptible to the action of pressure and is displaceable within a cylinder (12), the movement of the said piston being capable of having the axial movement produced by the electric motor (9) superimposed upon it,
characterised in that
the pressure acts via the pressure-medium reservoir (15) when a defined control variable corresponding to a predetermined loading status of the electric motor (9) is reached, the pressure increase within the cylinder (13) being proportional to the load on the electric motor (9).

2. A control method according to Claim 1,
characterised in that
the control variable is measured directly at the electric motor (9).

3. A control method according to Claim 2,
characterised in that
in order to produce the control signal the torque of the electric motor (9) is measured.

4. A control method according to Claim 2,
characterised in that
in order to produce the control signal the current consumption of the electric motor (9) is measured.

5. A control method according to one of Claims 1 to 4,
characterised in that
the feedback signal for controlling the circulation of the pressure medium is the actual forward-drive speed and thus the actual injection speed, which is compared with the reference speed.

6. A control method according to one of Claims 1 to 4,
characterised in that
the feedback signal for controlling the circulation of the pressure medium is the actual pressure within the injection nozzle in the after-pressure phase, the said actual pressure being compared with the reference after-pressure.

7. A control method according to Claim 6,
characterised in that
the pressure signals are produced by use of a melting-pressure measuring instrument.

8. A control method according to Claim 6,
characterised in that
the pressure signals are produced by a measurement of force in the connection region (4) of injection screw (2) and translational drive member (5).

9. An electric drive for performing the control method according to one or more of Claims 1 to 8, with an electric motor (9) which via a suitable gear unit (6, 7) is connected with the screw (2) for axial forward drive of the latter,
characterised
by a piston (11) which from a pressure-medium reservoir (15) is susceptible to the action of pressure and is displaceable within a cylinder (13), the movement of the said piston being capable of having the axial movement produced by the electric motor (9) superimposed upon it, the cylinder (13) exhibiting the piston (11) being connectable to the pressure-medium reservoir (15) via at least one regulable and controllable hydraulic valve (14) and means being provided for measuring the loading status of the electric motors (9) and for the purpose of producing a control signal for the cylinder (13).

10. An electric drive according to Claim 9,
characterised in that
the pressure-medium reservoir (15) is chargeable by a pump (16) driveable by an electric motor (9), a coupling system (8) being provided via which the electric motor (9) is connectable alternatively with the pump (16) or with the gear unit (5, 6, 7).

## Revendications

1. Procédé de régulation pour l'assistance hydraulique d'un moyen d'entraînement électrique dans une machine de moulage par injection, en particulier pour l'avance de la vis lors de l'opération d'injection et/ou dans la phase de maintien en pression, avec un moteur électrique (9) qui produit le mouvement d'avance axiale par l'intermédiaire d'une transmission appropriée (6, 7), et avec des pistons (11) qui peuvent être mis en pression à partir d'un réservoir d'agent de pression (15) et coulisser dans un cylindre (12) et dont le mouvement peut être superposé au mouvement axial produit par le moteur électrique (9), caractérisé en ce que la mise en pression par l'intermédiaire du réservoir d'agent de pression (15) intervient lorsque est atteind une valeur de régulation définie qui correspond à un état de charge préétabli du moteur électrique (9), l'élévation de pression dans le cylindre (13) étant proportionnelle à la charge supportée par le moteur électrique (9).

2. Procédé de régulation selon la revendication 1, caractérisé en ce que l'on mesure la valeur de régulation directement sur le moteur électrique (9).

3. Procédé de régulation selon la revendication 2, caractérisé en ce que, pour produire le signal de régulation, on mesure le couple du moteur électrique (9).

4. Procédé de régulation selon la revendication 2, caractérisé en ce que, pour produire le signal de régulation, on mesure la consommation de courant du moteur électrique (9).

5. Procédé de régulation selon l'une des revendications 1 à 4, caractérisé en ce que le signal de rétroaction pour la régulation du circuit d'agent de pression est la vitesse réelle d'avance et donc la vitesse effective d'injection, laquelle est comparée avec la vitesse de consigne.

6. Procédé de régulation selon l'une des revendications 1 à 4, caractérisé en ce que le signal de rétroaction pour la régulation du circuit d'agent de pression est la pression réelle qui règne dans la filière d'injection dans la phase de maintien en pression et qui est comparée avec la pression de maintien de consigne.

7. Procédé de régulation selon la revendication 6, caractérisé en ce que les signaux de pression sont produits par la mise en oeuvre d'un appareil de mesure de la pression de la masse fondue.

8. Procédé de régulation selon la revendication 6, caractérisé en ce que les signaux de pression sont produits par une mesure de force dans la zone de jonction (4) de la vis d'injection (2) et de l'organe d'entraînement en translation (5).

9. Moyen d'entraînement électrique pour la mise en oeuvre du procédé de régulation selon une ou plusieurs des revendications 1 à 8, comprenant un moteur électrique (9) qui est relié par une transmission appropriée (6, 7) à la vis (2) pour produire le mouvement d'avance axiale de celle-ci, caractérisé par un piston qui peut être mis en pression à partir d'un réservoir d'agent de pression (15) et coulisser dans un cylindre (13) et dont le déplacement peut être superposé au mouvement axial produit par le moteur électrique (9), le cylindre (13) pourvu du piston (11) pouvant être relié au réservoir d'agent de pression (15) par l'intermédiaire d'au moins une valve hydraulique commandée et régulée (14), et des moyens étant prévus pour mesurer l'état de charge du moteur électrique (9) et pour produire un signal de régulation pour le cylindre (13).

10. Moyen d'entraînement électrique selon la revendication 9, caractérisé en ce que le réservoir d'agent de pression (15) peut être rechargé par une pompe (16) entraînée par le moteur électrique (9), un système d'accouplement (8) étant prévu pour relier le moteur électrique (9) sélectionnement à la pompe (16) ou à transmission (5, 6, 7).
